# EUROPEAN PATENT APPLICATION

(11) **EP 1 174 044 A1**
(43) Date of publication of application: **23.01.2002**
(21) Application number: 00115422.8
(22) Date of filing: 17.07.2000
(51) Int. Cl.: A23L 1/32, A23B 5/005

(54) **Method for preparing an egg emulsion**

(71) Applicant: Chang, Yi-Min, Hsinchu City (TW)
(72) Inventor: Chang, Yi-Min, Hsinchu City (TW)
(74) Representative: Kihn, Pierre Emile Joseph

(57) **Abstract**

A method for preparing an egg emulsion includes the steps of: (a) mixing a desired amount of egg white and/or egg yolk with an appropriate amount of water, and treating the mixture with an enzyme to react for a period of time; (b) separating the aqueous layer of the treated mixed solution; and (c) heating the separated aqueous layer by a heat source to a temperature in the range from 60°C to 70°C for a desired period of time, and obtaining an egg emulsion after removing the heat source.

## Description

### 1. Field of the invention

The invention relates to a method for preparing an egg emulsion.

### 2. Description of related art

Protein is a nitrogen-containing material and consists of amino acids. Protein is an essential component for the construction of an organism as well as an essential material for regulating the physiological function of an organism. In general, the source of proteins that we take in may include animal proteins such as eggs, milk, meats, etc. and plant proteins such as cereals, beans, etc. Among those proteins, in view of their Protein Efficiency Ratio (PER) value (i.e. gram(s) of the weight gained after taking in one gram of protein), the PER value of chicken eggs is about 4. However, the PER values of soybeans and flour are only about 2.4 and 1, respectively. The PER values were reported in Huang bo chao et al., Essentials of Nutrition, ninth edition, (Taiwan, Health World Medical Publishing Company Limited press, 1991), pp. 61-63. A protein having a higher PER value also means that said protein possesses a higher quality. Furthermore, with regard to the Net Protein Utilization (NPU) value (NPU= (the amount of retained nitrogen/the amount of nitrogen intake) × 100), the NPU value of eggs is higher than other sources of proteins. Adelle Davis ed., Let's Stay Healthy, (Taiwan, Shy Chaur Publishing Co. Ltd. press, 1993), describes that chicken eggs contain eight amino acids that are essential to humans and are a so-called "complete protein." The Biological Value (BV) of chicken eggs is 100. This means that the protein provided by chicken eggs can be completely assimilated by our bodies. However, the BV of milk is only 75. Accordingly, eggs are the most valuable nutritional source of protein.

Therefore, based on a desire to obtain an egg food product that can be conveniently absorbed, the inventor has developed a method for preparing an egg emulsion.

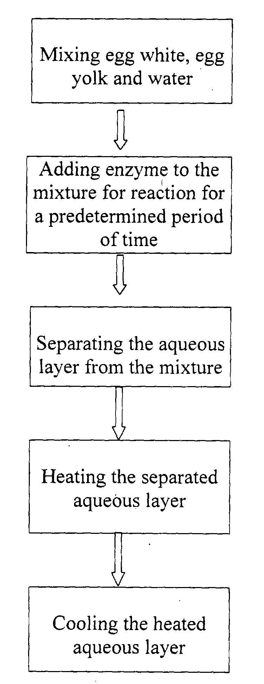

An object of the invention is to provide a method for preparing an egg emulsion, which comprises the steps of:
(a) mixing a desired amount of egg white and/or egg yolk with an appropriate amount of water, and treating the mixture with an enzyme to react for a period of time;
(b) separating the aqueous layer of the treated solution; and
(c) heating the separated aqueous layer in a heat source at a temperature in the range from 60°C to 70°C for a desired period of time, and then obtaining an egg emulsion after removing the heat source.
In the drawing:
The attached drawing is a flow chart showing the steps of the method of the invention.

The invention relates to a method for preparing an egg emulsion. Eggs that can be used in the method in accordance with the present invention are those commonly used for eating. Examples of eggs suitable for use in the method are chicken eggs, duck eggs, goose eggs, turkey eggs, pigeon eggs, etc. Studies have reported that eggs contain cholesterol. It is known that cholesterol substantially exists in egg yolk. Therefore, the method according to the invention may use egg whites as the raw material if an egg food product without cholesterol is desired. Nevertheless, the method may also use egg white, egg yolk or a mixture thereof as the raw material if a cholesterol-containing egg food product is acceptable, or cholesterol in egg yolk can be removed after pretreating the egg yolks. Persons skilled in the art can choose egg whites, egg yolks or a mixture thereof for use in the method based on the desired purposes.

In egg white or egg yolk, some components are water-soluble and some are water-insoluble. When the water-insoluble components are treated with an enzyme to react for a period of time, said components will become water-soluble. The method for preparing an egg emulsion is characterized by mixing a desired amount of egg white and/or egg yolk with appropriate amounts of water and an enzyme to react for a period of time. Preferably, the ratio between the amounts of egg white and/or egg yolk and water is about 1:3-4. The reaction time can be optionally adjusted based on the amounts of egg white and/or egg yolk, water and the enzyme used. During the reaction, the mixture can be optionally stirred, shaken or vibrated.

The enzymes suitable for use in the method include proteases, amylases, lipases and so on. The preferred enzymes used in the method are proteases. Suitable proteases include those commonly used in foodstuffs such as papain and bromelin. Those enzymes can be obtained from natural sources or synthesized. In addition, the enzymes used in the method can be a single enzyme or a mixture of enzymes. The form of enzymes is not specific and can be solid such as powder and granules, or liquid such as a solution. Persons skilled in the art can choose any appropriate form of enzyme(s) to carry out the method based on the desired results.

When the raw material used only contains egg white, the reaction mixture becomes a mixed solution comprising a clear aqueous layer and a precipitate after being treated with an enzyme to react for a period of time. The aqueous layer can be separated by known methods such as sedimentation, centrifugation, filtration, etc. However, when the raw material used contains egg yolk, the reaction mixture becomes a mixed solution comprising a clear aqueous layer and a yellow slurry after being treated with an enzyme to react for a period of time. Likewise, the aqueous layer can be separated by known methods such as centrifugation, filtration, etc.

Thereafter, heating the separated aqueous layer by a heat source to a temperature in the range from 60°C to 70°C for a desired period of time results in an egg emulsion after removing the heat source.

Furthermore, during the preparation process, the eggs used are easily infected by salmonella. Therefore, it is not appropriate to eat any raw egg food products. It is possible to suffer from Salmonellosis if someone eats a salmonella-contaminated egg emulsion. The heating temperature in the range from 60°C to 70°C in the method is sufficient to kill salmonella. Furthermore, when elevating the heating temperature for preservative and storage purposes, stabilizers or thickeners can be further added to the egg emulsion prepared by the method to maintain the stability of the egg emulsion. In addition, the aqueous layer separated in the method can be further used for other commercial purposes.

The invention now will be illustrated by the following examples. However, the invention should not be construed as being limited to these examples.

### EXAMPLE 1

Egg white of chicken eggs (about 100 ml), water (about 300-400 ml) and papain (15 g) were placed in a container. After 3 days, a clear aqueous layer and a precipitate were present in the reaction mixture. The aqueous layer was separated by filtration. Then, the separated aqueous layer was heated by a heat source to a temperature in the range from 60°C to 70°C for a desired period of time, and an egg emulsion was obtained after removing the heat source.

### EXAMPLE 2

Egg white and egg yolk of chicken eggs (about 100 ml), water (about 300-400 ml) and papain (15 g) were placed in a container. After 3 days, a clear aqueous layer and a yellow slurry were present in the reaction mixture. The aqueous layer was separated by centrifugation. Then, the separated aqueous layer was heated by a heat source to a temperature in the range from 60°C to 70°C for a desired period of time, and an egg emulsion was obtained after removing the heat source.

It must be understood that the specification and examples are illustrative purpose only but do not limit the scope of the present invention.

## Claims

1. A method for preparing an egg emulsion, which comprises the steps of:
(a) mixing a desired amount of egg white and/or egg yolk with an appropriate amount of water, and treating the mixture with an enzyme to react for a period of time;
(b) separating the aqueous layer of the treated mixed solution; and
(c) heating the separated aqueous layer by a heat source to a temperature in the range from 60°C to 70°C for a desired period of time, and obtaining an egg emulsion after removing the heat source.

2. The method according to claim 1, wherein the separation in step (b) is achieved by using centrifugation.

3. The method according to any one of claims 1, wherein said enzyme is a single enzyme or a mixture of enzymes.

4. The method according to claim 3, wherein said enzyme is selected from the group consisting of protease, amylase and lipase.

5. The method according to claim 4, wherein said protease is selected from the group consisting of papain and bromelin.

6. The method according to claim 1, wherein stabilizers or thickeners can be further added to the egg emulsion obtained in step (c).

7. The method according to claim 1, wherein the separation in step (b) is achieved by using filtration
